# EUROPEAN PATENT APPLICATION

(11) **EP 0 703 690 A1**
(43) Date of publication of application: **27.03.1996**
(21) Application number: 95114643.0
(22) Date of filing: 18.09.1995
(51) Int. Cl.: H04M 1/00

(54) **Telephone circuit**

(30) Priority: 22.09.1994 GB 9419127
(71) Applicant: MOTOROLA SEMICONDUCTEURS S.A., F-31023 Toulouse Cédex (FR)
(72) Inventor: Arnaud, Thierry, F-31500 Toulouse (FR); Clement, Patrick, CH-1030 Bussigny (CH)
(74) Representative: Hudson, Peter David

(57) **Abstract**

A telephone circuit (5) for connection to a telephone line comprises a line interface circuit (10) for sending and receiving communication signals to and from the line. The line interface circuit (10) includes a variable parameter value. Control means (20) is coupled to receive parameter value signals from the line interface circuit and to send control signals to control the parameter value of the line interface circuit (10). The control means (20) processes the received parameter value signals to derive the control signals in order to achieve a desired value of the parameter.

## Description

### FIELD OF THE INVENTION

This invention relates to telephone circuits.

### BACKGROUND OF THE INVENTION

Many telephones contain electronic telephone circuits which generally use a microprocessor to manage the dialling function of the telephone and to define the characteristics of a speech circuit within the telephone.

The dialling function is typically performed only when a key is pressed by a user, and the characteristics of the speech circuit are established during the initial set up of communication and remain unaltered for the duration of the communication.

During the communication the speech circuit is arranged to alter dynamic characteristics such as microphone and loudspeaker gain.

The problem with this arrangement is that such a speech circuit requires many components such as timers, peak detectors and comparators to perform these dynamic characteristic alterations, which makes the speech circuit relatively large, complex and expensive.

Furthermore, the microprocessor is idle during the time the speech circuit is active, thus full use is not made of its capabilities.

This invention seeks to provide a telephone circuit in which the above mentioned disadvantages are mitigated.

### SUMMARY OF THE INVENTION

According to the present invention there is provided a telephone circuit for connection to a telephone line, comprising, a line interface circuit for sending and receiving communication signals to and from the line and including at least one variable parameter value; control means coupled to receive parameter value signals from the line interface circuit and for sending control signals to control the parameter value of the line interface circuit; wherein the control means processes the received parameter value signals to derive the control signals in order to achieve a desired value of the at least one parameter.

Preferably the line interface circuit is arranged to derive the at least one parameter value from the communication signals. The at least one parameter value is preferably derived from an amplitude of the communication signals. Alternatively, the at least one parameter value is preferably derived from an instantaneous value of the communication signals.

Preferably the line interface circuit further comprises storing means for storing the control signals. The storing means preferably comprises a register for storing the control signals and a D/A converter for deriving analogue signals from the control signals.

Preferably the line interface circuit further comprises sensing means coupled to sense the parameter values and to derive the parameter value signals therefrom. The sensing means preferably comprises quantization means and a flag register. Alternatively the sensing means preferably comprises sampling means and a flag register.

Preferably the control means is a microprocessor.

In this way fewer components are required to perform the dynamic characteristic alterations of the line interface circuit, and more efficient use is made of the microprocessor.

### BRIEF DESCRIPTION OF THE DRAWINGS

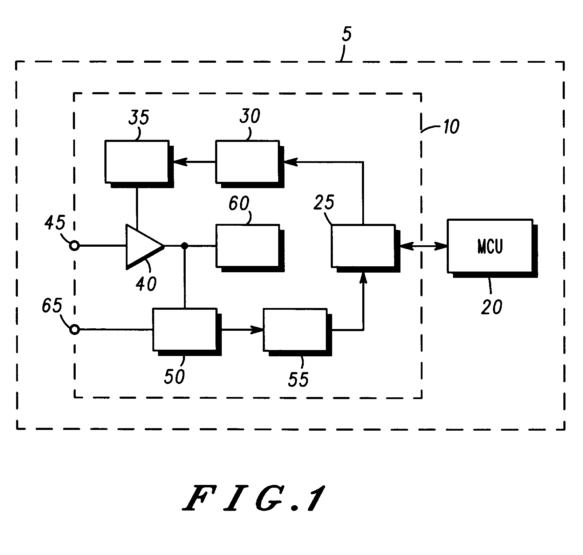

An exemplary embodiment of the invention will now be described with reference to the drawing of FIG.1 which shows a preferred embodiment of a telephone circuit in accordance with the invention.

### DETAILED DESCRIPTION OF A PREFERRED EMBODIMENT

Referring to FIG.1, there is shown a telephone circuit 5, comprising a speech circuit 10 coupled to an MCU (microcontroller unit) 20. The telephone circuit 5 may be fabricated on a single semiconductor device, incorporating the speech circuit 10 and the MCU 20.

The speech circuit 10 comprises a bi- directional interface 25, which may be a serial interface or a parallel interface. A transmit gain register 30 is coupled to receive a transmit gain signal from the interface 25, for storing a transmit gain register value indicative of the received transmit gain signal. The transmit gain register 30 is a 5-bit register, allowing a value range of 31 steps, each step corresponding to a 1dB per interval. Other components and elements of the speech circuit 10, such as an interface to a telephone line, are not shown in FIG.1.

A digital to analogue (D/A) converter 35 is coupled to receive the transmit gain register value from the transmit gain register 30, for providing an analogue control signal in response to the transmit gain register value.

A microphone amplifier 40 receives an input signal from a microphone 45 and the analogue control signal from the D/A converter 35. The analogue control signal controls the gain of the microphone amplifier 40. An amplified output from the microphone amplifier 40 conveys an amplified transmission signal to a line amplifier 60. The line amplifier 60 provides a final stage of amplification before the amplified transmission signal is transmitted down the telephone line (not shown).

The amplifier transmission signal is also coupled to a quantization circuit 50 which is arranged to compare instantaneous peak values of the amplified transmission signal with a reference voltage signal VRef, from a reference voltage signal input 65. VRef corresponds to the maximum amplitude acceptable for the amplified transmission signal. The transmission sensing circuit 50 produces a digital output signal in dependence upon the compared signals.

A flag register 55 is coupled to receive the digital output signal from the quantization circuit 50. An output from the flag register 55 is also coupled to the interface 25.

In typical telephone circuits, after the initial input from the microprocessor which sets static values for the characteristics, any further dynamic change in the characteristics is made from within the speech circuit, using automatic gain control techniques and components such as timers, peak detectors and comparators.

In operation of the telephone circuit 5, and by way of example, the control of the transmit gain characteristic will be described in detail below.

The microprocessor controls the speech circuit 10 and other elements (not shown) of the telephone circuit 5 via the interface 25. When a call is set up, characteristics of the speech circuit 10 including transmit gain are set initially by the microprocessor, by sending control signals to the speech circuit 10 via the interface 25. The control signals include the transmit gain signal, which is used to store an appropriate transmit gain register value in the transmit gain register 30.

The D/A converter 35 provides an analogue control signal in dependence upon the transmit gain register value, to control the gain of the microphone amplifier 40. In this way amplification of the input signal from the microphone 45 is set by the analogue control signal, to provide the amplified transmission signal.

The above operation represents a static set up of the transmit gain characteristic only. In order that the microprocessor can also dynamically control the transmit gain characteristic, a signal is required to be fed back to the microprocessor 20. This is achieved by the quantization circuit 50, the flag register 55 and the interface 25 as follows.

The quantization circuit 50 senses the amplified transmission signal, and compares instantaneous peak values of the amplified transmission signal with the reference voltage signal VRef from the reference voltage signal input 65. The quantization circuit 50 generates the digital output signal if the amplified transmission signal is greater than VRef.

The digital output signal then sets the flag within the flag register 55 to high, which causes an interrupt to be sent via the interface 25 to the microprocessor 20. In response to the interrupt, the microprocessor sends a new transmit gain register signal to set the transmit gain register value to give rise to a lower gain from the microphone amplifier 40.

The flag register 55 is then reset and the quantization circuit 50 senses the new peak value of the amplified transmission signal, performs the comparison and sends the digital output signal to the flag register if the amplified transmission signal is greater than VRef.

If no interrupt is received for a fixed period of time, the microprocessor 20 sends a transmit gain signal to increase the gain. In this way the microprocessor 20 dynamically controls the transmit gain characteristic, by striving for the maximum gain possible which does not result in the instantaneous peak values of the amplified transmission signal exceeding the reference voltage signal VRef.

It will be appreciated by a person skilled in the art that alternative embodiments to the one described above are possible. For example, other characteristics of the telephone circuit 5, including gain control of a loudspeaker amplifier, overvoltage protection and anti-howling gain control may be derived from other signals within the speech circuit 10 (such as other communication signals) and controlled in a similar manner to the transmit gain described above.

Furthermore, the flag register 55 may be used for more than one characteristic. Such an arrangement would involve multiple flags within the register, one flag for each controlled characteristic. When one of the flags is set high, an interrupt is triggered and sent to the microprocessor 20 which then looks at the flag register 55 to determine which flag is set high and therefore which characteristic requires an adjustment to be made.

A sampling circuit may be used in place of the quantization circuit 50. The sampling circuit would be arranged to sample the amplitude of the appropriate communication signal.

The transmit gain register 30 could have a different number of bits than the 5-bit register described above. If a 6-bit register is provided, a 63 step value range is possible, allowing smaller dB per interval steps, or greater dynamic range.

## Claims

1. A telephone circuit for connection to a telephone line, comprising, a line interface circuit for sending and receiving communication signals to and from the line and including at least one variable parameter value; control means coupled to receive parameter value signals from the line interface circuit and for sending control signals to control the parameter value of the line interface circuit;
wherein the control means processes the received parameter value signals to derive the control signals in order to achieve a desired value of the at least one parameter.

2. The telephone circuit of claim 1 wherein the line interface circuit is arranged to derive the at least one parameter value from the communication signals.

3. The telephone circuit of claim 1 or claim 2 wherein the at least one parameter value is derived from an amplitude of the communication signals.

4. The telephone circuit of claim 1 or claim 2 wherein the at least one parameter value is derived from an instantaneous value of the communication signals.

5. The telephone circuit of any preceding claim wherein the line interface circuit further comprises storing means for storing the control signals.

6. The telephone circuit of claim 5 wherein the storing means comprises a register for storing the control signals and a D/A converter for deriving analogue signals from the control signals.

7. The telephone circuit of any preceding claim wherein the line interface circuit further comprises sensing means coupled to sense the parameter values and to derive the parameter value signals therefrom.

8. The telephone circuit of claim 7 wherein the sensing means comprises quantization means and a flag register.

9. The telephone circuit of claim 7 wherein the sensing means comprises sampling means and a flag register.

10. The telephone circuit of any preceding claim wherein the control means is a microprocessor.
